# EUROPÄISCHE PATENTSCHRIFT

(11) **EP 1 269 296 B1**
(45) Veröffentlichungstag und Bekanntmachung des Hinweises auf die Patenterteilung: **15.09.2004**
(21) Anmeldenummer: 01931379.0
(22) Anmeldetag: 22.03.2001
(51) Int. Cl.: G06F 1/20, H01M 8/00

(54) **KÜHLANORDNUNG FÜR ELEKTRISCHE GERÄTE**
COOLING SYSTEM FOR ELECTRICAL APPLIANCES
DISPOSITIF DE REFROIDISSEMENT DESTINE A DES APPAREILS ELECTRIQUES

(30) Priorität: 30.03.2000 DE 10015829
(43) Veröffentlichungstag der Anmeldung: 02.01.2003
(73) Patentinhaber: Fujitsu Siemens Computers GmbH, 80807 München (DE)
(72) Erfinder: KORNMAYER, Ingbert, 86159 Augsburg (DE)
(74) Vertreter: Epping Hermann & Fischer
(86) Internationale Anmeldenummer: PCT/DE2001/001113
(87) Internationale Veröffentlichungsnummer: WO 2001/075567

(56) Entgegenhaltungen:
- EP-A- 0 788 172
- US-A- 5 932 365
- JÜRGEN RINK : "Dauerläufer, Brennstoffzellen für notebooks" ZEITSCHIFT C'T MAGAZIN COMPUTER TECHNIK, [Online] November 1998 (1998-11), XP002175888 Gefunden im Internet: <URL:http:/www.heise.de/ct/98/11/041/> [gefunden am 2001-08-27] in der Anmeldung erwähnt

## Beschreibung

Die vorliegende Erfindung betrifft eine Kühlanordnung mit zu kühlenden elektrischen Verbrauchern.

Bei der Umwandlung elektrischer Energie in andere Energieformen sowie bei der Übertragung elektrischer Energie entstehen Verluste. Verluste entstehen auch in allen elektrischen Verbrauchern, beispielsweise in elektronischen Schaltkreisen. Dabei entsteht Verlustwärme. Aufgrund der immer höheren Integrationsdichte in elektronischen Schaltungen, sowie immer höherer Taktraten in den elektronischen Schaltungen, ist diese Entstehung von Verlustwärme zunehmend problematisch. Während Mikroprozessoren von Computersystemen noch vor einigen Jahren mit passiven Komponenten gekühlt werden konnten, beispielsweise mit Kühlkörpern und durch die natürliche Konvektion der Luft, erfordern heutige Prozessoren in handelsüblichen PCoder Notebook-Systemen aktive, üblicherweise elektrisch betriebene Lüfter zur Ableitung der entstehenden Verlustwärme. Auch die in Netzteilen, Speicherbausteinen und Laufwerken von Computersystemen erzeugte Verlustwärme muß häufig durch zusätzliche Komponenten, wie beispielsweise Lüfter oder sogenannte Heatpipes abgeführt werden.

Die Abführung von in elektronischen Systemen anfallender Verlustwärme ist unbedingt erforderlich, um eine unzulässige Temperaturerhöhung in den betreffenden Komponenten oder Bauelementen und damit eine mögliche Zerstörung sowie weitere Folgeschäden zu verhindern.

Problematisch bei der Verwendung aktiver Kühlelemente, beispielsweise Lüfter, sind die damit verbundene Erhöhung des Gesamtgewichts der betreffenden elektrischen Systeme, sowie zusätzlicher Aufwand bei der Montage, in der Logistik sowie bei der Qualifizierung des Personals. Ein weiteres Problem besteht darin, daß aktive Komponenten wie beispielsweise Lüfter ausfallen und dadurch teure Folgeschäden verursachen können. Darüber hinaus entstehen im Betrieb elektrischer Lüfter unerwünschte Nebengeräusche. Diese unerwünschten Nebengeräusche sind insbesondere bei der Verwendung von Lüftern in PC-Systemen oder Notebooks störend, da an solchen Arbeitsplätzen eine erhöhte Konzentrationsfähigkeit des Anwenders erforderlich ist.

In der Zeitschrift c't Magazin für Computer Technik, Ausgabe 11, 1998, Seite 41, Heise Verlag, Hannover, ist in einem Artikel von Dr. Jürgen Rink mit dem Titel "Dauerläufer, Brennstoffzellen für Notebooks" ein Notebook mit einer Brennstoffzelle zu dessen elektrischer Energieversorgung angegeben.

Eine Brennstoffzelle ist aus EP-A-0 788 172 bekannt.

Aufgabe der vorliegenden Erfindung ist es, eine Kühlanordnung zur geräuschlosen Kühlung, insbesondere für elektrische Geräte, anzugeben.

Bezüglich der Anordnung wird die Aufgabe mit einer Kühlanordnung für elektrische Geräte gelöst, mit einer Brennstoffzelle; zumindest einem elektrischen Verbraucher, der an die Brennstoffzelle mittels einer elektrisch leitfähigen Verbindung angeschlossen ist, und der in einem Betriebszustand eine Wärmequelle ist; einem Brennstoffspeicher, der zur Zuführung von Brennstoff mit der Brennstoffzelle verbunden ist, und der in einem durch Entnahme von Brennstoff gekennzeichneten Betriebszustand eine Wärmesenke ist; und einer thermisch leitfähige Verbindung zwischen Wärmequelle und Wärmesenke.

Der Erfindung liegt das Prinzip zugrunde, Verlustwärme erzeugende elektrische Verbraucher dadurch zu Kühlen beziehungsweise ihnen dadurch Wärme zu entziehen, daß zwischen dem elektrischen Verbraucher und einer Wärmesenke eine thermisch gut leitfähige Verbindung hergestellt ist. Eine Wärmesenke entsteht bei Entnahme von Brennstoff aus einem Brennstoffspeicher, beispielsweise durch Expansion des Brennstoffes oder andere thermodynamische Prozesse, welche ihrer Umgebung Wärme entziehen.

Das beschriebene Prinzip hat den Vorteil, daß diese Kühlung geräuschlos ist. Dies ist besonders bei Anwendung des Prinzips in elektrischen Systemen, welche in Büroarbeitsplätzen eingesetzt werden, von großer Bedeutung. Darüber hinaus ist das beschriebene Prinzip einfach und kostengünstig realisierbar.

Zusätzlich ist eine Brennstoffzelle vorgesehen, welche mit dem Brennstoffspeicher zur Zuführung von Brennstoff zur Brennstoffzelle verbunden ist. Die Brennstoffzelle ist weiterhin elektrisch mit dem zumindest einen elektrischen Verbraucher verbunden. Eine Brennstoffzelle ist eine galvanische Zelle, bei der chemische Energie in elektrische Energie umgewandelt wird. Der Vorgang in der Brennstoffzelle wird dabei als kaltes Feuer bezeichnet. Brennstoffzellen können beispielsweise mit Wasserstoff und Sauerstoff betrieben werden. Da der Sauerstoff aus der Umgebungsluft entnehmbar sein kann, muß lediglich der Wasserstoff als Brennstoff in einem Wasserstoffspeicher speicherbar sein. Der Wasserstoff kann dabei als verflüssigtes Gas gespeichert sein, oder auch in einem Hydridspeicher gebunden sein. Bei der Entnahme von Wasserstoff aus einem Hydridspeicher wird der Umgebung Wärme entzogen. Folglich besteht eine Wärmesenke. Der entnommene Brennstoff wird einer Brennstoffzelle zugeführt, in der elektrische Energie erzeugt wird, wobei die Menge der erzeugten Energie von der Menge des entnommenen Brennstoffs abhängt. An die Brennstoffzelle können elektrische Verbraucher angeschlossen sein. Diese elektrischen Verbraucher können Verlustwärme erzeugen. Die entstehende Verlustwärme der Stromverbraucher ist damit mit der Entnahme von Wasserstoff aus dem Brennstoffspeicher gekoppelt. Wenn nun die Wärmequellen repräsentierenden elektrischen Verbraucher thermisch mit der Wärmesenke gekoppelt werden, so ist die dadurch erzielbare Kühlung der elektrischen Verbraucher vorteilhaft, da die Kühlwirkung dann besonders groß ist, wenn viel Verlustwärme entsteht und umgekehrt klein ist, wenn wenig Verlustwärme entsteht.

Wenn das elektrische System ein tragbares Computersystem ist, ist die beschriebene Kühlung dadurch besonders vorteilhaft, daß zum einen keine zusätzliche elektrische Energie für die aktiven Kühler, beispielsweise Lüfter, benötigt wird, und andererseits bei tragbaren Computersystemen geräuschbehaftete Kühlelemente besonders störend für den Anwender im Betrieb sind.

Brennstoffzellen, welche zur Erzeugung elektrischer Energie in tragbaren Computersystemen eingesetzt werden, ermöglichen im Zusammenhang mit Hydridspeichern eine lange, netzunabhängige Betriebsdauer. Mit herkömmlichen Batterien und Akkumulatoren ist ein netzunabhängiger Betrieb auf wenige Stunden begrent. Die beschriebene Kühlanordnung kann beispielsweise in tragbaren Computern (Notebooks, Laptops) zur Energieversorgung und Kühlung eingesetzt werden, um den Vorteil der langen, netzunabhängigen Betriebszeiten mit der Kühlung leistungsfähiger Komponenten, wie Prozessoren, zu verbinden.

Auch in anderen, elektrisch betriebenen Kleingeräten, besonders auf dem Gebiet der Informations- und Kommunikationstechnik, bei denen der Wunsch nach langen Betriebszeiten ohne ein Wiederaufladen am Netz mit der Notwendigkeit einer aktiven Kühlung zusammenfällt, ist eine Anwendung des beschriebenen Prinzips sinnvoll. Solche Anwendungen können beispielsweise Organizer, PDAs (Personal Digital Assistants) und Mobiltelefone sein.

Weiterhin ist eine Anwendung des beschriebenen Prinzips auch in mit Brennstoffzellen elektrisch betriebenen Kraftfahrzeugen denkbar, bei denen ein Elektromotor, der sich im Betrieb erhitzt und eine Kühlung erfordert, thermisch mit dem zum Betrieb der Brennstoffzelle erforderlichen Brennstoffspeicher verbunden ist.

In einer weiteren, vorteilhaften Ausführungsform der vorliegenden Erfindung ist der Brennstoffspeicher ein Hydridspeicher. In Hydridspeichern ist Wasserstoff oder ein anderer, zur Reaktion in Brennstoffzellen geeigneter Brennstoff, gebunden, beispielsweise in Form von Lithiumhydrid oder Metallhydriden.

In einer weiteren, vorteilhaften Ausführungsform der vorliegenden Erfindung ist zumindest einer der zu kühlenden elektrischen Verbraucher der Prozessor eines Computersystems. Zentralprozessoren (CPU) von Computersystemen weisen eine besonders hohe Integrationsdichte sowie besonders hohe Taktraten auf. Damit ist die pro Fläche beziehungsweise pro Volumen erzeugte Verlustleistung besonders groß. Der Ableitung der entstehenden Verlustwärme kommt hier eine zentrale Bedeutung zu.

Weitere Ausgestaltungen der vorliegenden Erfindung sind in den Unteransprüchen angegeben.

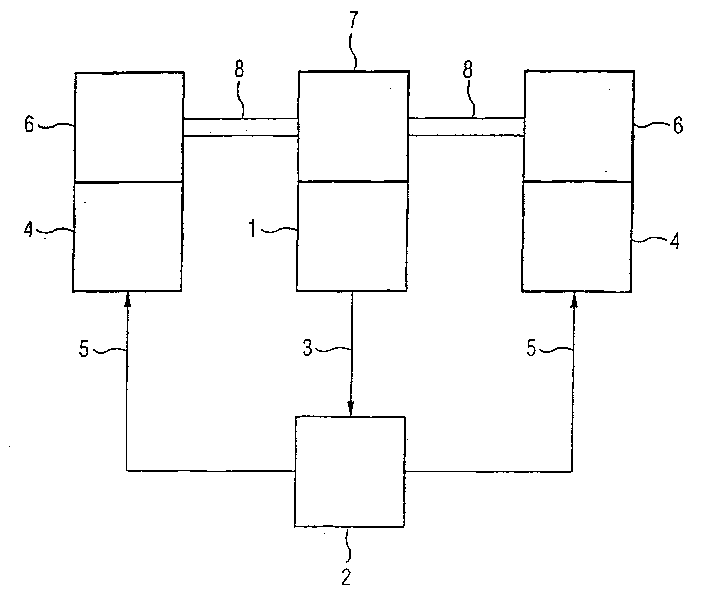

Die vorliegende Erfindung wird nachfolgend an einem Ausführungsbeispiel anhand der Zeichnung näher erläutert.

### Es zeigt:

Die Figur ein Blockschaltbild eines prinzipiellen Ausführungsbeispiels der vorliegenden Erfindung.

Die Figur zeigt einen Brennstoffspeicher 1, welcher an eine Brennstoffzelle 2 angeschlossen ist. Zwischen Brennstoffspeicher 1 und Brennstoffzelle 2 ist eine Verbindung 3 vorgesehen. Diese Verbindung 3 ist gasdicht ausgeführt, um beispielsweise gasförmigen Wasserstoff der Brennstoffzelle 2 zuzuführen. An die Brennstoffzelle 2 sind elektrische Verbraucher 4 angeschlossen. Hierfür sind zwischen Brennstoff zelle 2 und elektrischen Verbrauchern 4 elektrische Leitungen 5 angeordnet. In einem Betriebszustand erzeugt die Brennstoffzelle elektrische Energie, welche mittels Leitungen 5 den elektrischen Verbrauchern 4 zugeführt wird. Diese wirken im Betrieb als Wärmequellen 6. Der Brennstoffspeicher 1, dem im Betrieb Brennstoff entnommen wird, repräsentiert eine Wärmesenke 7, da beispielsweise durch Expansion des Brennstoffs der Umgebung Wärme entzogen wird. Zur Kühlung der elektrischen Verbraucher 4 sind zwischen Wärmequellen 6 und Wärmesenke 7 thermisch leitfähige Verbindungen 8 angeordnet. Mittels der thermisch leitfähigen Verbindungen 8 wird Wärme von den Wärmequellen 6 zur Wärmesenke 7 transportiert.

Die beschriebene Anordnung hat den Vorteil, daß zur Kühlung der elektrischen Verbraucher der ohnehin zur Stromversorgung des elektrischen Systems in Verbindung mit einer Brennstoffzelle erforderliche Brennstoffspeicher verwendet werden kann. Weiterhin ist es vorteilhaft, daß die Kühlwirkung dann besonders groß ist, wenn eine besonders große Verlustwärme abzuführen ist. Dies ist dann der Fall, wenn in der Brennstoffzelle besonders viel elektrische Energie erzeugt und damit besonders viel Brennstoff aus dem Brennstoffspeicher entnommen wird.

Bei einer Anwendung der beschriebenen Kühlung in einem tragbaren Computersystem, beispielsweise in einem Notebook, welches zur Erzeugung der erforderlichen elektrischen Energie eine Brennstoffzelle aufweist, kann auf die sonst unabdingbaren, geräuschbehafteten Lüfter zur aktiven Kühlung elektrischer Komponenten verzichtet werden.

Im vorliegenden Ausführungsbeispiel ist der Brennstoffspeicher 1 mit Wasserstoff gefüllt, der zur Energieerzeugnung in der Brennstoffzelle 2 mit Sauerstoff reagiert. Aber auch der Betrieb mit anderen Brennstoffen, beispielsweise mit Methanol, ist denkbar. Der Wasserstoff ist in einem Hydridspeicher in einem reversiblen Prozeß gebunden. Bei der Entnahme des Wasserstoffs aus dem Hydridspeicher und Expansion des Wasserstoffs entsteht eine Wärmesenke. Da der Hydridspeicher wiederaufladbar ist, kann die beschriebene Anordnung in vorteilhafter Weise in tragbaren Computersystemen eingesetzt werden.

## Patentansprüche

1. Kühlanordnung für elektrische Geräte, mit
- einer Brennstoffzelle (2),
- zumindest einem elektrischen Verbraucher (4), der an die Brennstoffzelle (2) mittels einer elektrisch leitfähigen Verbindung (5) angeschlossen ist, und der in einem Betriebszustand eine Wärmequelle (6) ist,
- einem Brennstoffspeicher (1), der zur Zuführung von Brennstoff mit der Brennstoffzelle (2) verbunden ist, und der in einem durch Entnahme von Brennstoff gekennzeichneten Betriebszustand eine Wärmesenke (7) ist, **gekennzeichnet durch**
- eine thermisch leitfähige Verbindung (8) zwischen Wärmequelle (6) und Wärmesenke (7).

2. Kühlanordnung nach Anspruch 1,
**dadurch gekennzeichnet, daß**
das elektrische Gerät ein tragbares Computersystem ist.

3. Kühlanordnung nach Anspruch 1 oder 2,
**dadurch gekennzeichnet, daß**
der Brennstoffspeicher (1) ein Hydridspeicher ist.

4. Kühlanordnung nach einem der Ansprüche 1 bis 3,
**dadurch gekennzeichnet, daß**
der zumindest eine Verbraucher (4) ein Zentralprozessor in einem Computersystem ist.

## Claims

1. Cooling arrangement for electrical appliances, having
- a fuel cell (2),
- at least one electrical load (4) which is connected to the fuel cell (2) by means of an electrically conductive connection (5) and which is a heat source (6) when it is operating,
- a fuel reservoir (1), which is connected to the fuel cell (2) in order to supply fuel and is a heat sink (7) in an operating state that is **characterized by** fuel being taken from it,
**characterized by**
- a thermally conductive connection (8) between the heat source (6) and the heat sink (7).

2. Cooling arrangement according to Claim 1,
**characterized in that**
the electrical appliance is a portable computer system.

3. Cooling arrangement according to Claim 1 or 2,
**characterized in that**
the fuel reservoir (1) is a hydride reservoir.

4. Cooling arrangement according to one of Claims 1 to 3,
**characterized in that**
the at least one load (4) is a central processor in a computer system.

## Revendications

1. Dispositif de refroidissement d'appareils électriques, comprenant :
- une pile (2) à combustible,
- au moins un appareil (4) consommateur d'électricité qui est raccordé à la pile (2) à combustible au moyen d'une liaison (5) conductrice de l'électricité et qui est dans un état de fonctionnement une source (6) de chaleur,
- une réserve (1) de combustible qui, pour l'envoi de combustible, communique avec la pile (2) à combustible et qui, dans un état de fonctionnement **caractérisé par** un prélèvement de combustible, est un puits (7) de chaleur, **caractérisé par**
- une liaison (8) thermiquement conductrice entre la source (6) de chaleur et le puits (7) de chaleur.

2. Dispositif de refroidissement sur la revendication 1,
**caractérisé en ce que** l'appareil électrique est un système informatique portatif.

3. Dispositif de refroidissement suivant la revendication 1 ou 2,
**caractérisé en ce que** la réserve (1) de combustible est une réserve d'hydrures.

4. Dispositif de refroidissement suivant l'une des revendications 1 à 3,
**caractérisé en ce que** au moins un appareil (4) consommateur est un processeur central d'un système informatique.
